# EUROPEAN PATENT SPECIFICATION

(11) **EP 3 323 534 B1**
(45) Date of publication and mention of the grant of the patent: **19.06.2019**
(21) Application number: 17209698.4
(22) Date of filing: 11.02.2014
(51) Int. Cl.: B22F 3/105, B33Y 10/00, B33Y 30/00, B33Y 50/02, B29C 64/153, B29C 64/386

(54) **SELECTIVE LASER SOLIDIFICATION METHOD**
VERFAHREN FÜR SELEKTIVE LASERERSTARRUNG
PROCÉDÉ DE SOLIDIFICATION SÉLECTIVE PAR LASER

(30) Priority: 14.02.2013 GB 201302602; 05.03.2013 GB 201303920; 07.03.2013 US 201361774215 P; 15.03.2013 US 201361791636 P
(43) Date of publication of application: 23.05.2018
(62) Divisional of application: 14705391.2
(73) Proprietor: Renishaw PLC, Wotton-under-Edge, Gloucestershire GL12 8JR (GB)
(72) Inventor: FERRAR, Ben Ian, Stoke-on-Trent, Staffordshire ST7 2TY (GB)
(74) Representative: Matthews, Paul

(56) References cited:
- EP-A1- 2 492 084
- EP-A2- 1 839 781
- WO-A1-92/08592
- WO-A1-93/08928
- JP-A- 2006 124 732
- US-A- 5 352 405
- US-B1- 6 215 093
- FERRAR B ET AL: "Gas flow effects on selective laser melting (SLM) manufacturing performance", JOURNAL OF MATERIALS PROCESSING TECHNOLOGY, ELSEVIER, NL, vol. 212, no. 2, 26 September 2011 (2011-09-26), pages 355-364, XP028119930, ISSN: 0924-0136, DOI: 10.1016/J.JMATPROTEC.2011.09.020 [retrieved on 2011-10-02]
- "M-Solutions", , 1 June 2013 (2013-06-01), XP055134972, Retrieved from the Internet: URL:http://ip-saas-eos-cms.s3.amazonaws.co m/public/b1a64caa0c54d208/bc2d30d3f7b4b821 634dfafa303ee441/systemdatasheet_M280.pdf [retrieved on 2014-08-18]

## Description

The present invention relates to selective laser solidification and in particular to an improved selective laser melting process and apparatus in which an order in which objects or parts of objects are built is selected based on a direction of gas flow.

### Background

Additive manufacturing or rapid prototyping methods for producing objects comprise layer-by-layer solidification of a material, such as a metal powder material, using a laser beam. A powder layer is deposited on a powder bed in a build chamber and a laser beam is scanned across portions of the powder layer that correspond to a cross-section of the object being constructed. The laser beam melts or sinters the powder to form a solidified layer. After selective solidification of a layer, the powder bed is lowered by a thickness of the newly solidified layer and a further layer of powder is spread over the surface and solidified, as required. In a single build, more than one object can be built, the objects spaced apart in the powder bed.

During the melting or sintering process, debris (e.g. condensate, unsolidified particles of powder etc) is produced within the build chamber. It is known to introduce a gas flow through the build chamber in an attempt to remove debris from the chamber in the gas flow. For example, the M280 model of machine produced by EOS GmbH, Munich, Germany comprises a series of gas outlet nozzles located to the rear of the powder bed that pass a flow of gas to a series of exhaust vents that are located at the front of the powder bed. In this manner, a planar layer of gas flow is created at the surface of the powder bed. A similar arrangement is provided in Renishaw's AM250 and AM125 machines, wherein apertures at either side of a powder bed provide substantially planar gas flow across the powder bed. It has been found that debris can be blown from one section of an object to another section of the or another object. This can result in non-uniformity and increased porosity of the solidified metal layers generated by the melting process. In particular, debris blown across the powder bed can result in an increase in surface roughness such that pores are formed between adjacent layers. Non-uniformities in a build can result in an object not conforming to the desired design and damage the apparatus. In particular, a wiper blade is typically used to spread each powder layer across the powder bed. Solidified structures that project out of the powder bed can catch on and cause damage to the wiper blade. Damaged wiper blades may result in powder layers with ridges of powder. Accordingly, non-uniformities in a build may be a concern not just for the layer being formed, but powder layers formed thereafter.

EP 2492084 discloses an apparatus and method for manufacturing 3D objects by means of SLS. The apparatus comprises a powder bed onto which a powder layer can be deposited, a gas flow unit for passing a flow of gas over the powder bed along a gas flow direction, a laser scanning unit for scanning a laser beam over the powder layer to selectively solidify at least part of the powder layer to form one or more objects and a processing unit for selecting a scanning sequence of the laser beam.

Ferrar B et al, "Gas flow effects on selective laser melting (SLM) manufacturing performance", Journal of Materials Processing Technology, vol. 212, no. 2, pages 355-364, discloses an investigation on the effect of inert gas flow within the selective laser melting (SLM) process.

US 5352405 discloses a method and apparatus for fabricating three-dimensional objects by SLS. In order to reduce inconsistencies in structural and textural integrity, and in thermal effects that can cause distortion, methods for ensuring that overlapping laser scans are accomplished in a consistent manner relative to the thermal flow from the sintered locations are utilized.

WO 92/08592 discloses an apparatus for fabricating parts by selective laser sintering is disclosed, which includes a baffle for directing gas at the target surface. The baffle may direct the gas directly at the target surface, or may be constructed so that the gas spirals toward the target surface in cyclonic fashion; further alternative baffles can be used to direct the gas at the target surface in a non-uniform, fashion, including turbulent or arbitrary flow patterns.

DE 10 208150 discloses how solid articles are built up in layers from liquid or powder raw material using irradiation with a steered beam, preferably a laser beam. Especially near the edge regions, the beam is controlled so that the impact zone oscillates. The motion includes forward and backward components as the consolidated strip of material is built up in the forward direction.

### Summary of Invention

According to a first aspect of the invention there is provided a selective laser solidification method according to claim 1.

The scanning sequence may be such that debris produced by the scan is carried away from areas of the powder layer which are yet to be scanned. In this way, these areas of powder are not disturbed and contaminated by the debris ensuring that, when these areas are solidified, the solidified layer is built to a desired, uniform height. For example, one area may be scanned before another area because the area is located downwind in the gas flow direction of the other area. Debris produced in forming the upwind area may be blown onto the already formed downwind area but this debris may be removed by the wiper and, if not removed, covered by the next powder layer to be remelted when forming the next cross-section. Accordingly, scanning areas in this order is less likely to result in non-uniformities in the build.

The one or more objects may be formed through the solidification of separate islands in at least one powder layer, an order in which islands are formed based upon the relative location of the islands in the at least one powder layer and the gas flow direction.

The order in which islands are formed may be such that debris produced by forming an island is carried away from areas of the powder layer in which islands are yet to be formed. In this way, these areas of powder are not disturbed and contaminated by the debris ensuring that, when these areas are solidified, the solidified layer is built to a desired, uniform height. For example, at least part of an island may be formed before at least part of another island because the at least part of the island is located downwind in the gas flow direction of at least part of the other island. Debris produced in forming the upwind island may be blown onto the already formed downwind island but this debris will be covered by the next powder layer and the debris is likely to be remelted when forming the next cross-section. Accordingly, building the islands in this order is less likely to result in non-uniformities in the build.

For islands wherein a first island is located wholly downwind of a second island, the first island may be formed completely before forming the second island. However, if a first island is located to at least partially surround a second island such that parts of the first island are downwind and other parts of the first island are upwind of the second island, at least part of the second island may be formed in between forming the downwind and upwind parts of the first island.

The method may be a computer-implemented method.

### Description of the Drawings

Embodiments of the invention will now be described, as examples only, with reference to the accompanying drawings, in which:-
**Figure 1** is a schematic view of a laser solidification apparatus according to one embodiment of the invention;
**Figure 2** is a schematic view of the laser solidification apparatus from another side;
**Figure 3** is a flowchart showing the steps of a method according to the invention;
**Figure 4** is a plan view of islands to be solidified on a build platform of the apparatus, wherein debris fallout zones have been projected; and
**Figure 5** is a plan view of islands to be solidified on a build platform of the apparatus, wherein debris fallout zones according to a different embodiment of the invention have been projected.

### Description of Embodiments

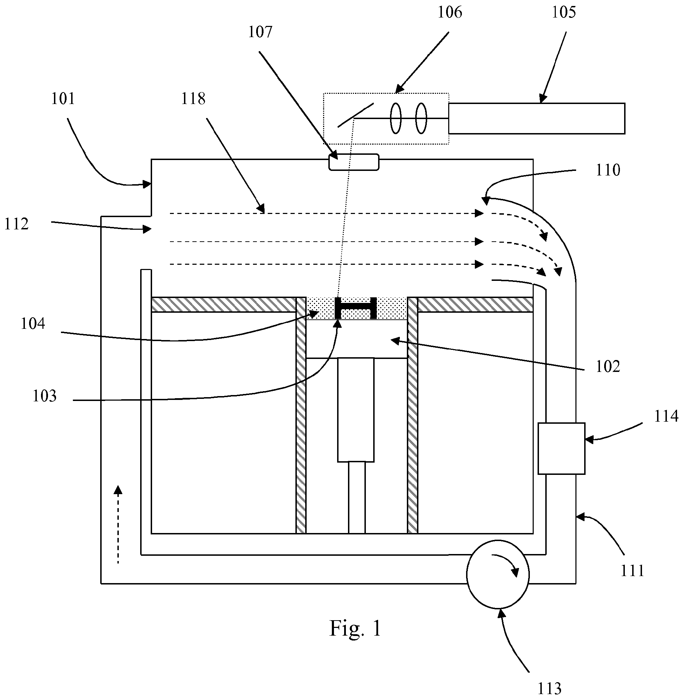

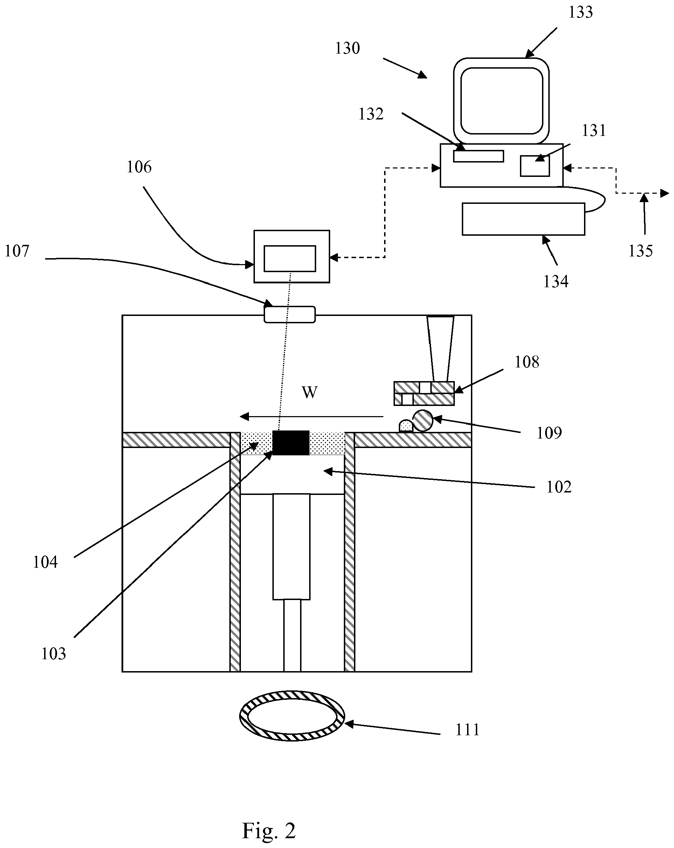

Referring to Figures 1 and 2, a laser solidification apparatus according to an embodiment of the invention comprises a build platform 102 for supporting an object 103 built by selective laser melting powder 104. The platform 102 can be lowered in the chamber 101 as successive layers of the object 103 are formed. Layers of powder 104 are formed as the object 103 is built by dispensing apparatus 108 and a wiper 109. For example, the dispensing apparatus 109 may be apparatus as described in WO2010/007396. A laser module 105 generates a laser for melting the powder 104, the laser directed as required by optical module 106 under the control of a computer 130. The laser enters the build chamber via a window 107.

An inlet 112 and outlet 110 are arranged for generating a gas flow across the powder bed formed on the build platform 102. The inlet 112 and outlet 110 are arranged to produce a laminar flow having a flow direction from the inlet to the outlet, as indicated by arrows 118. Gas is re-circulated from the outlet 110 to the inlet 112 through a gas recirculation loop 111. A pump 113 maintains the desired gas pressure at inlet 112 and openings 5, 6. A filter 114 is provided in the recirculation loop 111 to filter from the gas condensate that has become entrapped in the flow. It will be understood that more than one inlet 112 may be provided in the build chamber 101. Furthermore, rather than extending outside of the build chamber 101, the recirculation loop 111 may be contained within the build chamber 101.

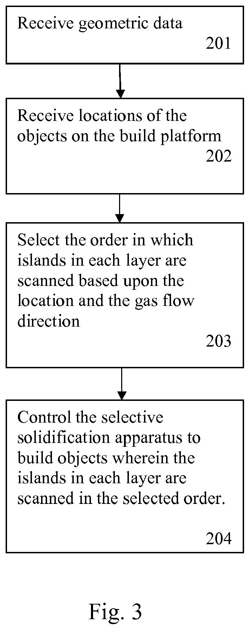

Computer 130 comprises a processor unit 131, memory 132, display 133, user input device 135, such as a keyboard, touch screen, etc, a data connection to modules of the laser sintering unit, such as optical module 106 and laser module 105, and an external data connection 135. Stored on memory 132 is a computer program that instructs the processing unit to carry out the method described with reference to Figures 3 to 5.

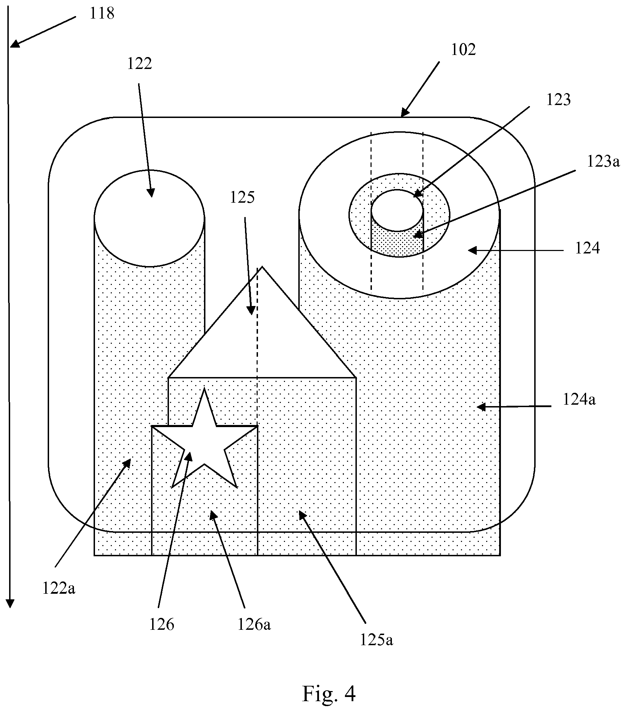

Referring to Figure 3, geometric data of objects to be built, such as in the form of an STL file, are received 201 by the computer 130, for example over the external data connection 135. The processing unit 131 receives 202 information on the location of the objects on the build platform 102. This location information may already be defined in the STL or the user may the select, using the user input device 135, where each object should be located on the build platform 102. For each layer, the processing unit 131 identifies areas of the layer that are to be solidified and determines 203 an order in which these areas should be scanned by the laser beam. An example of how this may be done is shown in Figure 4.

Figure 4 shows five separate areas (islands) 122 to 126 to be solidified for a particular layer. For each island 122 to 126, the processing unit projects a debris fallout zone 122a to 126a in a gas flow direction from the island. The processing unit 131 then determines, for each island 122 to 126, if any other island falls within the debris fallout zone. If so, the processing unit selects to form this other island before forming the island for which the debris fallout zone was determined. For example, in Figure 4, islands 125 and 126 fall within the fallout zone of island 122 and therefore, are selected to be scanned before island 122. Island 126 also falls within the fallout zone of island 125 and therefore, should be formed before island 125.

Rather than restricting ordering of the build to a complete island, the processing unit 131 may be arranged to select to form, in between forming different parts of the island, at least part of another island. Figure 4 illustrates two examples of this. In the first example, island 123 is completely surrounded by island 124. Accordingly, island 124 comprises parts that are both upwind and downwind of island 123. In such a scenario, the processing unit 131 selects to process the part of the island that is located downwind of island 123 before scanning island 123 and then scans the part of the island 124 that is upwind of island 123. The part of island 124 that is neither upwind nor downwind of island 123 may be scanned before or after island 123 and the selection of the scanning order of these parts may be based on other criteria, such as scan speed. The different parts of island 124 are illustrated by the dotted lines. In the second example, rather than scanning all of island 125 after scanning island 126, the part of island 125 that is not upwind of island 126 may be scanned before island 126. There may be reasons for scanning part of island 125 ahead of island 126, such as to optimize scan speed, variations in material composition and/or focal position.

In this embodiment, the processing unit 131 carries out this process for each layer.

However, in another embodiment, rather than calculating a scanning order for each layer, it may be possible to determine an order for multiple layers from a single analysis. For example, a fallout zone could be determined from a footprint of each object on the build platform 102, the order being determined based upon whether other objects fall within a debris fallout zone calculated based on this footprint. Even though for some layers the debris fallout zone may be smaller than that calculated from the footprint, such a method may provide a reasonable generalization that reduces the amount of processing required in determining an order in which the parts should be built.

The selected order of scanning the parts may be displayed to the user and the user may be able to change the order. The user can then activate the build to cause the processing unit to control 204 the optical module 106 and laser module 105 to scan the powder layers to form the islands in the selected order.

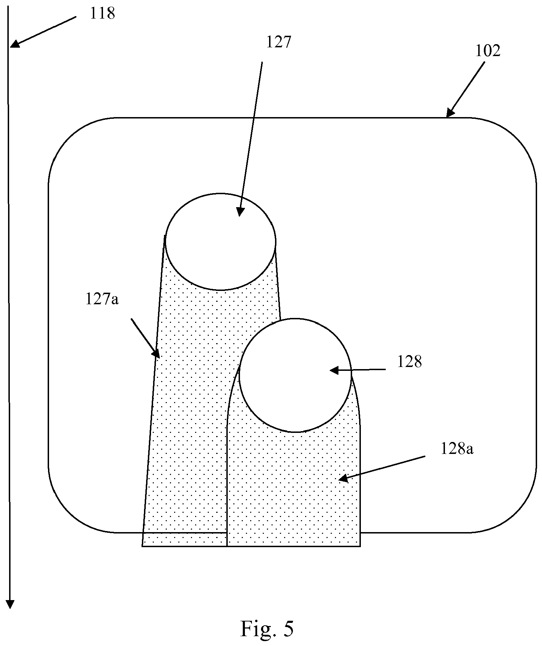

In the embodiment shown in Figure 4, the debris fallout zones are projected by extending straight lines in the gas flow direction from edges of the islands. However, other projections of the fallout zones could be used. Two examples are shown in Figure 5. For island 127, a fallout zone 127a is projected as diverging straight lines at a slight angle to the gas flow direction to take into account slight turbulence in the gas flow that may cause the debris to be deposited beyond the outmost edges of the island in a direction perpendicular to the gas flow direction. A similar principal is embodied by island 128 and fallout zone 128a, where an initially curved border to the fallout zone is used to model that locally debris may be thrown out by the impact of the laser beam on the powder layer but further from the island the debris is more likely to be carried away along a straighter path by the gas flow.

In a further embodiment, rather than the processing unit selecting the order in which islands are scanned, a user may select an order in which islands are built. This may be achieved by the processing unit 131 causing the display 133 to display images similar to those shown in Figures 4 and 5 so that the user can select the order islands are scanned based upon this visualisation of the fallout zones. The processing unit 131 then receives user inputs from the user input device of the order in which islands should be scanned.

It will be understood that in the above description, the islands may come together in earlier or later layers so as to form a single object or may remain separate so as to form one or more separate objects.

In a further embodiment (not shown), the processing unit selects a location of objects in the powder bed based upon a direction W the wiper 109 spreads powder across the powder bed 104. In particular, the locations of the objects in the powder bed may be selected such that debris generated by solidification of one area of a powder bed is not spread by the wiper to another area of the powder bed to be solidified, such as an area to be solidified in a subsequent powder layer. Such a task may also be carried out manually by a user with the aid of a computer. For example, processing unit 131 may cause the display 133 to display debris spreading zones for the objects whose locations have been identified such that the user can select locations in the powder bed for further objects based upon the displayed debris spreading zones.

It will be understood that alterations and modifications may be made to the invention without departing from the scope of the invention as defined herein. For example, the invention could be applied to a single island, wherein it is desirable to scan a downwind part of the island ahead of scanning an upwind part of the island.

## Claims

1. A selective laser solidification method comprising; depositing a plurality of successive powder layers onto a powder bed (104), generating a flow of gas from an inlet (112) on one side of the powder bed (104) to an outlet (110) on an opposite side of the powder bed (104) such that the flow of gas passes over the powder bed (104) in a gas flow direction (118), and scanning a laser beam over each successive powder layer in a scanning sequence to selectively solidify at least part of the powder layer to form one or more objects (103), the scanning sequence **characterised by** areas to be solidified in each successive layer being scanned in an order such that each area of the successive layer located downwind in the gas flow direction of another area of the successive layer is scanned before the other area.

2. A selective laser solidification method according to claim 1, wherein the scanning sequence is such that debris produced during a scan is carried away from areas of the powder layer which are yet to be scanned.

3. A selective laser solidification method according to any one of the preceding claims, wherein the one or more objects (103) are formed through the solidification of separate islands (122, 123, 124, 125, 126, 127, 128) in at least one of the successive powder layers, wherein the scanning sequence is such that the islands are scanned in an order such that each island located downwind in the gas flow direction of another island is scanned before the other island.

4. A selective laser solidification method according to claim 3, wherein the islands (122, 123, 124, 125, 126, 127, 128) are formed in an order such that debris produced by forming an island is carried away from areas of the powder layer in which islands are yet to be formed.

5. A selective laser solidification method according to claim 3 or claim 4, wherein at least part of a first island, located downwind in the gas flow direction of at least part of the second island, is formed before the at least part of the second island.

6. A selective laser solidification method according to any one of claims 3 to 5, wherein, the first island is located wholly downwind of the second island and is formed completely before forming the second island.

7. A selective laser solidification method according to any one of claims 3 to 5, wherein, the second island is at least partially surrounded by the first island such that parts of the first island are downwind and other parts of the first island are upwind of the second island and at least part of the second island is formed, in between forming the downwind and upwind parts of the first island.

## Patentansprüche

1. Selektives Laserverfestigungsverfahren, umfassend: Abscheiden einer Vielzahl von aufeinanderfolgenden Pulverschichten auf einem Pulverbett (104), Erzeugen eines Gasstroms von einem Einlass (112) auf einer Seite des Pulverbettes (104) zu einem Auslass (110) auf einer gegenüberliegenden Seite des Pulverbettes (104), so dass der Gasstrom über das Pulverbett (104) in einer Gasströmungsrichtung (118) gelangt, und Scannen eines Laserstrahls über jede folgende Pulverschicht in einer Scanfolge, um selektiv mindestens einen Teil der Pulverschicht zu verfestigen, um ein oder mehrere Objekte (103) zu bilden, wobei die Scanfolge durch Bereiche gekennzeichnet ist, die in jeder folgenden Schicht zu verfestigen sind, die in einer solchen Reihenfolge gescannt werden, so dass jeder Bereich der folgenden Schicht, der sich windabwärts in der Gasströmungsrichtung eines anderen Bereichs der folgenden Schicht befindet, vor dem anderen Bereich gecannt wird.

2. Selektives Laserverfestigungsverfahren nach Anspruch 1, wobei die Scanfolge so ist, dass während eines Scans entstehende Rückstände von Bereichen der Pulverschicht, die noch gescannt werden müssen, weggetragen werden.

3. Selektives Laserverfestigungsverfahren nach einem der vorhergehenden Ansprüche, wobei das eine oder die mehreren Objekte (103) durch die Verfestigung von getrennten Inseln (122, 123, 124, 125, 126, 127, 128) in mindestens einer der folgenden Pulverschichten gebildet wird/werden, wobei die Scanfolge so ist, dass die Inseln in einer solchen Reihenfolge gescannt werden, dass jede Insel, die windabwärts in der Gasströmungsrichtung einer anderen Insel liegt, vor der anderen Insel gescannt wird.

4. Selektives Laserverfestigungsverfahren nach Anspruch 3, wobei die Inseln (122, 123, 124, 125, 126, 127, 128) in einer solchen Reihenfolge gebildet werden, dass durch die Bildung einer Insel erzeugte Rückstände von Bereichen der Pulverschicht, in denen noch Inseln gebildet werden müssen, weggetragen werden.

5. Selektives Laserverfestigungsverfahren nach Anspruch 3 oder Anspruch 4, wobei mindestens ein Teil einer ersten Insel, der windabwärts in der Gasströmungsrichtung von mindestens einem Teil der zweiten Insel liegt, vor dem mindestens einen Teil der zweiten Insel gebildet wird.

6. Selektives Laserverfestigungsverfahren nach einem der Ansprüche 3 bis 5, wobei die erste Insel vollständig windabwärts der zweiten Insel liegt und vollständig gebildet wird, bevor die zweite Insel gebildet wird.

7. Selektives Laserverfestigungsverfahren nach einem der Ansprüche 3 bis 5, wobei die zweite Insel zumindest teilweise von der ersten Insel umgeben ist, so dass Teile der ersten Insel windabwärts und andere Teile der ersten Insel windaufwärts der zweiten Insel liegen und zumindest ein Teil der zweiten Insel zwischen dem Bilden der windabwärts und windaufwärts gelegenen Teile der ersten Insel gebildet wird.

## Revendications

1. Procédé de solidification sélective par laser comprenant le fait : de déposer une pluralité de couches de poudre successives sur un lit de poudre (104), de générer un écoulement de gaz à partir d'une entrée (112) sur un côté du lit de poudre (104) vers une sortie (110) sur un côté opposé du lit de poudre (104) de sorte que l'écoulement de gaz passe sur le lit de poudre (104) dans une direction d'écoulement de gaz (118), et de balayer un faisceau laser sur chaque couche de poudre successive dans une séquence de balayage pour solidifier de manière sélective au moins une partie de la couche de poudre afin de former un ou plusieurs objet(s) (103), la séquence de balayage étant **caractérisée par** des régions à solidifier dans chaque couche successive étant balayées dans un ordre tel que chaque région de la couche successive située en aval dans la direction d'écoulement de gaz d'une autre région de la couche successive est balayée avant l'autre région.

2. Procédé de solidification sélective par laser selon la revendication 1, dans lequel la séquence de balayage est telle que les débris produits lors d'un balayage sont emportés loin des régions de la couche de poudre qui n'ont pas encore été balayées.

3. Procédé de solidification sélective par laser selon l'une quelconque des revendications précédentes, dans lequel le ou les plusieurs objet(s) (103) est/sont formé(s) par la solidification d'îlots séparés (122, 123, 124, 125, 126, 127, 128) dans au moins l'une des couches de poudre successives, où la séquence de balayage est telle que les îlots sont balayés dans un ordre tel que chaque îlot situé en aval dans la direction d'écoulement de gaz d'un autre îlot est balayé avant l'autre îlot.

4. Procédé de solidification sélective par laser selon la revendication 3, dans lequel les îlots (122, 123, 124, 125, 126, 127, 128) sont formés dans un ordre tel que les débris produits en formant un îlot sont emportés loin des régions de la couche de poudre où des îlots n'ont pas encore été formés.

5. Procédé de solidification sélective par laser selon la revendication 3 ou 4, dans lequel au moins une partie d'un premier îlot, situé en aval dans la direction d'écoulement de gaz d'au moins une partie du deuxième îlot, est formée avant l'au moins une partie du deuxième îlot.

6. Procédé de solidification sélective par laser selon l'une quelconque des revendications 3 à 5, dans lequel le premier îlot est situé entièrement en aval du deuxième îlot et est formé complètement avant la formation du deuxième îlot.

7. Procédé de solidification sélective par laser selon l'une quelconque des revendications 3 à 5, dans lequel, le deuxième îlot est au moins partiellement entouré par le premier îlot, de sorte que des parties du premier îlot soient en aval et que d'autres parties du premier îlot soient en amont du deuxième îlot et au moins une partie du deuxième îlot soit formée entre la formation des parties en aval et des parties en amont du premier îlot.
